# EUROPÄISCHE PATENTSCHRIFT

(11) **EP 3 293 716 B1**
(45) Veröffentlichungstag und Bekanntmachung des Hinweises auf die Patenterteilung: **25.09.2019**
(21) Anmeldenummer: 17188666.6
(22) Anmeldetag: 31.08.2017
(51) Int. Cl.: G08B 25/10, G08G 1/127, G08G 1/00, G08B 25/01, B60N 3/10

(54) **NOTRUFEINRICHTUNG FÜR EIN KRAFTFAHRZEUG**
EMERGENCY CALL DEVICE FOR A MOTOR VEHICLE
DISPOSITIF D'APPEL D'URGENCE POUR UN VÉHICULE AUTOMOBILE

(30) Priorität: 09.09.2016 DE 102016116958
(43) Veröffentlichungstag der Anmeldung: 14.03.2018
(73) Patentinhaber: BURY Sp. z o.o., 39-300 Mielec (PL)
(72) Erfinder: BURY, Henryk, 32584 Löhne (DE)
(74) Vertreter: Gramm, Lins & Partner Patent- und Rechtsanwälte PartGmbB

(56) Entgegenhaltungen:
- CN-U- 204 323 226
- DE-A1-102004 035 871
- US-A1- 2002 049 081
- US-A1- 2003 032 459
- US-A1- 2013 257 147

## Beschreibung

Die Erfindung betrifft eine Notrufeinrichtung für ein Kraftfahrzeug, wobei die Notrufeinrichtung eingerichtet ist, in einem Getränkehalter des Kraftfahrzeuges montiert zu werden und an eine Stromversorgung des Kraftfahrzeugs angeschlossen zu werden, durch die die Notrufeinrichtung mit elektrischer Energie versorgbar ist, wobei die Notrufeinrichtung eine Grundplatte zum Montieren in dem Getränkehalter und eine Notrufeinheit zum Befestigen an der Grundplatte aufweist, wobei die Notrufeinheit vorzugsweise lösbar an der Grundplatte befestigt ist. Ein derartiges Notrufsystem ist beispielsweise aus der CN 204 323 226 U bekannt.

Notrufsysteme für Kraftfahrzeuge, beispielsweise das unter dem Begriff "E-Call" bekannte System dienen dazu, beispielsweise im Falle eines Unfalls automatisch einen Notruf abzusetzen. Sie verfügen in der Regel über wenigstens einen Beschleunigungssensor, der verwendet wird, um einen Unfall zu detektieren. In diesem Fall wird ein Notruf an eine entsprechende Notrufzentrale gesendet.

Derartige Notrufeinrichtungen sind heute in vielen Kraftfahrzeugen serienmäßig oder als Sonderausstattung erhältlich. Sie sind bereits herstellerseitig in das Kraftfahrzeug integriert. Für Kraftfahrzeuge, die herstellerseitig nicht mit einer derartigen Notrufeinrichtung ausgestattet sind, sind Notrufeinrichtungen zum Nachrüsten erhältlich. Diese können beispielsweise im Kofferraum oder an einer nicht sichtbaren Stelle im Kraftfahrzeug eingebaut werden. Sie verfügen beispielsweise über eine Antenne, beispielsweise eine GSM-Antenne, sowie eine entsprechende Elektronik um selbsttätig einen Notruf absetzen zu können. Dies geschieht beispielsweise über ein Mobilfunknetz. Die Notfalleinrichtung kann vorteilhafterweise ein GPS-Modul oder ein anderes Modul zur Bestimmung der Position des Kraftfahrzeuges beinhalten, sodass in dem Notruf, der beispielsweise in Form einer Textnachricht, insbesondere einer SMS, abgesendet werden kann, nicht nur enthalten ist, dass ein Unfall geschehen ist, sondern auch eine Positionsangabe, sodass die notwendigen Einsatzkräfte unmittelbar zum Unfallort gelangen können. Zusätzlich verfügen Notrufeinrichtungen oftmals über ein Mikrofon, das im Fahrgastraum, möglichst im Bereich des Fahrers des Kraftfahrzeugs angeordnet wird. Ist die Notrufeinrichtung in der Lage, nicht nur eine Textnachricht als Notruf zu senden, sondern beispielsweise mit einer Notrufzentrale ein Telefongespräch zu etablieren, kann die Zentrale beispielsweise mit dem Fahrer des Kraftfahrzeugs sprechen und sich so beispielsweise nach der Schwere von Verletzungen, der Anzahl verletzter Personen oder anderer Details, die für die Organisation des Notfalleinsatzes wichtig sind, informieren.

Oftmals ist es gewünscht, dass die Notrufeinrichtung einen manuellen Taster aufweist, um beispielsweise auch dann einen Notruf absenden zu können, wenn ein Unfall zwar stattgefunden hat, die Sensoren, die einen Unfall detektieren sollen, diesen Unfall jedoch nicht detektiert haben. Dies ist beispielsweise dann sinnvoll, wenn das mit der Notrufeinrichtung ausgestattete Fahrzeug nicht selbst am Unfall beteiligt ist, sondern beispielsweise der Fahrer nur Zeuge eines Unfalls wurde. Nachteilig ist jedoch, dass derartige Notrufeinrichtungen einen relativ großen Bauraum benötigen, der in einem modernen Cockpit eines Kraftfahrzeugs kaum vorhanden ist.

Daher ist aus dem Stand der Technik eine Notrufeinrichtung bekannt, die in einen Zigarettenanzünder, also eine Zwölf-Volt-Anschlussbuchse eines Kraftfahrzeugs eingesteckt werden kann. Aufgrund des an dieser Stelle vorhandenen geringen Raums verfügt diese Notrufeinrichtung jedoch nicht über eine eigene Notrufeinheit, durch die der Notruf abgesetzt wird, sondern muss mit einem mobilen Kommunikationsgerät, beispielsweise einem Smartphone, verbunden werden. Dazu ist eine zusätzliche App, also ein Computerprogramm, notwendig, das auf dem Smartphone installiert sein muss. Zudem verfügt die Notrufeinrichtung nicht über einen manuellen Taster und auch eine mögliche Gesprächsverbindung zwischen einer angerufenen Notrufzentrale und dem Fahrer eines verunfallten Fahrzeuges kann nur über das Mobiltelefon etabliert werden. Nachteilig ist, dass nicht alle Funktionalitäten bei einer derartigen Notrufeinrichtung verwirklicht sind und zudem die Notrufeinrichtung nur dann funktioniert, wenn das passende Smartphone sich im Kraftfahrzeug befindet.

Der vorliegenden Erfindung liegt daher die Aufgabe zu Grunde, eine Notrufeinrichtung für ein Kraftfahrzeug derart weiterzuentwickeln, dass die vollständige Funktionalität verwendet werden kann und die Notrufeinrichtung platzsparend und dennoch gut zugänglich für den Fahrer des Kraftfahrzeugs im Innenraum eines Kraftfahrzeugs angeordnet werden kann.

Die Erfindung löst die gestellte Aufgabe durch eine Notrufeinrichtung für ein Kraftfahrzeug, die sich dadurch auszeichnet, dass an der Notrufeinheit und der Grundplatte korrespondierende Rast- oder Formschlusselemente angeordnet sind, durch die die Notrufeinheit an der Grundplatte verriegelbar ist, wobei die Notrufeinheit relativ zu der Grundplatte in zwei einander entgegengesetzten Richtungen bewegt, vorzugsweise gedreht werden muss, um die Notrufeinheit und die Grundplatte zu verriegeln
Die Notrufeinrichtung ist vorzugsweise in ihrer äußeren Formgebung, also der Kontur, Gestalt und/oder Größe an die Form, Gestalt und Größe des Getränkehalters angepasst. Vorzugsweise ist die Notrufeinrichtung so in dem Getränkehalter einsetzbar, dass sie im eingesetzten Zustand nicht wackelt oder klappert oder ein Zwischenraum zwischen der Notrufeinrichtung und der Wand des Getränkehalters weniger als 3 mm, bevorzugt weniger als 2 mm, besonders bevorzugt weniger als 1 mm beträgt. Der Abstand ist vorzugsweise über den Umfang der Notrufeinrichtung konstant im Rahmen der Fertigungstoleranzen.

Erfindungsgemäß weist die Notrufeinrichtung eine Grundplatte zum Montieren in dem Getränkehalter und eine Notrufeinheit auf, die an der Grundplatte befestigbar ist, wobei die Notrufeinheit vorzugsweise lösbar an der Grundplatte befestigt werden kann. Dadurch wird vorzugsweise erreicht, dass die Notrufeinheit bei Erschütterungen nicht klappert, selbst wenn ein vorgegebener und/oder gewünschter Abstand zwischen der Notrufeinheit und der Wand des Getränkehalters nicht eingehalten werden kann.

Die Grundplatte einer erfindungsgemäßen Notrufeinrichtung wird fest in einem Getränkehalter eines Kraftfahrzeugs montiert. Getränkehalter sind heute in den meisten Kraftfahrzeugen vorhanden und beispielsweise in der Mittelkonsole des Kraftfahrzeugs zwischen dem Fahrer und dem Beifahrer angeordnet. Sie müssen gut zugänglich sein, damit ein in dem Getränkehalter angeordnetes Getränk für den Fahrer und/oder den Beifahrer des Kraftfahrzeugs auch während der Fahrt leicht zugänglich ist. Gleichzeitig bietet der Getränkehalter ausreichend Platz, um die Notrufeinrichtung anzuordnen. Die Grundplatte wird dabei fest im Kraftfahrzeug montiert, sodass sie nicht, zumindest nicht ohne Werkzeug, entfernbar ist. Über eine vorzugsweise vorhandene Steckvorrichtung kann sie mit der Stromversorgung des Kraftfahrzeugs verbunden werden. Dies beinhaltet insbesondere die Verbindung für Plus- und Minus-Signale sowie für die Zündung. Die Grundplatte wird vorteilhafterweise am Boden des Getränkehalters so fixiert, dass die Führung eines Kabelbündels, durch das die Verbindung mit der Stromversorgung des Kraftfahrzeugs ermöglicht wird, nach außen möglich ist. Vorteilhafterweise lässt sich dieses Flachband in wenigstens zwei, bevorzugt vier unterschiedlichen Richtungen aus der Grundplatte herausführen.

An der Grundplatte kann die eigentliche Notrufeinheit befestigt werden. Die Notrufeinheit beinhaltet vorteilhafterweise wenigstens einen Beschleunigungssensor zum Detektieren eines Notfalls, beispielsweise eines Unfalls und/oder eine Einrichtung zum Versenden des Notrufes, insbesondere eine elektrische Steuerung sowie eine Antenne, mit der das Absenden von Notrufsignalen beispielsweise über ein Mobilfunknetz ermöglicht wird. Die Notrufeinrichtung verfügt vorzugsweise zudem über eine Positions-Erkennungs-Einheit, beispielsweise ein GPS-Modul.

Vorzugsweise ist die Positions-Erkennungs-Einheit als internes oder externes GPS-Modul ausgebildet und verfügt vorzugsweise über eine Antenne, um Satellitensignale aufzunehmen. Auch eine Aufteilung der Positions-Erkennungs-Einheit in Antenne und Auswerteelektronik ist möglich, wobei die Antenne als externe Einheit ausgebildet ist und sich die Auswerteelektronik beispielsweise in der Notrufeinheit befindet. Wenn die Positions-Erkennungs-Einheit oder lediglich deren Antenne als separates Bauteil ausgebildet ist, kann sie an verschiedenen Stellen im Innenraum des Kraftfahrzeugs befestigt werden. Vorzugsweise ist sie mit einem Mikrofon kombiniert oder kombinierbar, wobei sich in diesem Fall eine Vorzugsmontageposition ergibt, in der sowohl die GPS-Empfangssignale als auch die akustischen Verhältnisse für das Mikrofon besonders gut sind. Vorzugsweise sind dazu keine zusätzlichen Befestigungselemente notwendig. Eine Befestigung kann beispielsweise an einer Instrumententafel, der Mittelkonsole oder der Windschutzscheibe erfolgen. Die nötigen Befestigungselemente sind in der Einheit bereits integriert und können somit nicht verloren werden. Die Positions-Erkennungs-Einheit ist mit der Notrufeinheit oder einem anderen Teil der Notrufeinrichtung über eine Datenübertragungseinrichtung, vorzugsweise ein Kabel oder ein Kabelbündel verbunden.

Die Notrufeinheit verfügt vorteilhafterweise über ein manuelles Betätigungselement, beispielsweise einen Druckknopf oder einen Schalter, der so eingerichtet ist, dass bei Betätigen des manuellen Betätigungselementes der Notruf abgesetzt wird. Dies geschieht vorteilhafterweise auch dann, wenn der wenigstens eine Sensor keinen Notfall detektiert hat. Selbstverständlich ist es von Vorteil, wenn eine Sprachverbindung auch dann hergestellt werden kann, wenn ein Unfall oder Notfall bereits detektiert und ein entsprechender Notruf bereits gesendet wurde.

Vorzugsweise ist die Notrufeinheit lösbar an der Grundplatte befestigt. Dies ist insbesondere dann von Vorteil, wenn die Notrufeinheit oder die gesamte Notrufeinrichtung beispielsweise zu Servicezwecken einer Werkstatt zur Verfügung gestellt werden muss, ohne dass es dabei notwendig ist, auch das Kraftfahrzeug in die Werkstatt zu bringen.

Es hat sich als vorteilhaft herausgestellt, wenn die Notrufeinheit nur in diskreten Orientierungen, vorzugsweise nur in einer einzigen Orientierung, relativ zu der Grundplatte an der Grundplatte befestigbar ist. Auf diese Weise ist gewährleistet, dass insbesondere in der Notrufeinheit angeordnete Sensoren in der vorbestimmten Orientierung relativ zur Fahrtrichtung des Kraftfahrzeugs angeordnet sind. Dies ist insbesondere dann von Vorteil, wenn unterschiedliche Notrufe beispielsweise für unterschiedliche Notfälle und Unfälle abgesendet werden können. Dazu ist es notwendig, dass sichergestellt ist, dass die Sensoren die erwartete Größe messen. Dazu ist es insbesondere bei Beschleunigungssensoren wichtig, dass diese in der erwarteten und vorbestimmten Orientierung im Kraftfahrzeug angeordnet sind, um nicht Beschleunigungen in der "falschen Richtung" zu messen. Dies kann auch auf besonders einfache Weise dadurch sichergestellt werden, dass die Notrufeinheit nur in einer einzigen Orientierung oder in einer bestimmten Anzahl diskreter Orientierungen an der Grundplatte befestigbar ist. Die vorzugsweise einzige Orientierung ist somit eine auf die Fahrtrichtung des Kraftfahrzeugs ausgerichtete optimale Orientierung. Damit die Notrufeinheit die optimale Orientierung zur Fahrtrichtung einnehmen kann, ist es von Vorteil, dass bereits die Grundplatte in einer vorbestimmten, vorzugsweise eindeutig vorbestimmten, Orientierung in dem Getränkehalter angeordnet ist.

Alternativ oder zusätzlich dazu hat es sich als vorteilhaft herausgestellt, wenn die Notrufeinheit relativ zu der Grundplatte innerhalb eines vorbestimmten Winkelbereichs drehbar ist, wenn die Notrufeinheit mit der Grundplatte verbunden ist. Insbesondere für den Fall, dass die Notrufeinheit in jeder beliebigen Orientierung mit der Grundplatte verbindbar ist, kann auf diese Weise sichergestellt werden, dass die gewünschte Orientierung der Sensoren und damit auch der Messrichtungen der Sensoren zur Fahrtrichtung des Kraftfahrzeugs und/oder zur Längsachse des Kraftfahrzeugs oder zu einer anderen Orientierung sichergestellt ist.

Erfindungsgemäß sind an der Notrufeinheit und der Grundplatte zueinander korrespondierende Rast- oder Formschlusselemente angeordnet, durch die die Notrufeinheit an der Grundplatte verriegelbar ist. Weiter erfindungsgemäß muss die Notrufeinheit relativ zu der Grundplatte in zwei einander entgegengesetzten Richtungen bewegt werden, vorzugsweise gedreht werden, um die Notrufeinheit und die Grundplatte mechanisch zu verriegeln. Dadurch kann einerseits erreicht werden, dass nur bestimmte Orientierungen zwischen Notrufeinheit und Grundplatte möglich sind und andererseits sichergestellt werden, dass die Notrufeinheit auch bei schwereren Unfällen und starken Beschleunigungen nicht aus der Grundplatte und aus dem Getränkehalter entfernt werden kann. Insbesondere bei einem Aufprall, einem Überschlag oder einem sonstigen Unfall bestünde sonst die Gefahr, dass die Notrufeinheit sich von der Grundplatte löst und gegebenenfalls nicht mehr einsatzfähig ist.

Vorteilhafterweise verfügt die Grundplatte über drei Aussparungen, die vorteilhafterweise äquidistant über den Umfang der Grundplatte angeordnet sind. Diese Aussparungen haben vorteilhafterweise eine Form, die mit korrespondierend ausgestalteten Vorsprüngen, die an der Notrufeinheit angeordnet sind, derartig zusammenwirken, dass eine sichere Verriegelung der beiden Bauteile zueinander bewirkt wird.

Vorzugsweise wird die Notrufeinheit mit den sich daran befindenden Vorsprüngen in die Aussparungen eingesetzt. Anschließend muss die Notrufeinheit in eine erste Richtung gedreht werden, beispielsweise um 60°. Erst nach dieser Drehung ist es möglich, die Notrufeinheit weiter auf die Grundplatte zu zubewegen, da die Aussparung und die Vorsprünge diese Bewegung erst nach dieser Drehung ermöglichen. Zur endgültigen Verriegelung hat es sich als vorteilhaft herausgestellt, wenn die Notrufeinheit erneut relativ zur Grundplatte gedreht werden muss. Dies geschieht vorteilhafterweise in die entgegengesetzte Richtung, beispielsweise erneut um 60°. Selbstverständlich können auch andere Ausführungsformen einer mechanischen Verriegelung gewählt werden und/oder die Notrufeinheit mit den Aussparungen und die Grundplatte mit den Vorsprüngen ausgestaltet werden. Selbstverständlich ist es auch möglich, Aussparungen und Vorsprünge sowohl an der Grundplatte als auch an der Notrufeinheit vorzusehen. Wichtig ist lediglich, dass die Elemente an der Grundplatte und der Notrufeinheit zu einander korrespondierend ausgestaltet sind und eine mechanische Verriegelung erlauben.

Wie bereits dargelegt verfügt die Notrufeinrichtung vorteilhafterweise über wenigstens einen Beschleunigungssensor zum Detektieren einer Notsituation und eine Notrufsendevorrichtung, die eingerichtet ist, einen Notruf zu senden, wenn eine Notsituation detektiert wurde. Der wenigstens eine Detektor übermittelt die von ihm detektierten Werte in Form beispielsweise elektrischer Signale an eine elektrische Steuereinheit, in der beispielsweise eine Vergleichseinheit mit Sensor detektierten Werte mit vorbestimmten Grenzwerten vergleicht. Liegt der detektierte Wert beispielsweise über einem derartigen Grenzwert, ist dies als Kriterium in einer Auswerteeinheit dafür hinterlegt, dass ein Unfall stattgefunden hat. In diesem Fall sendet die Steuereinrichtung ein entsprechendes elektrisches oder elektronisches Signal an die Notrufsendevorrichtung, die daraufhin den Notruf absetzt. Die einzelnen Bestandteile und Einheiten der elektrischen Steuerung können selbstverständlich in einer einzigen elektronischen Datenverarbeitungseinrichtung integriert sein und beispielsweise durch eine entsprechende Software realisiert werden.

Vorzugsweise kann ein Notruf auch gesendet werden, wenn kein Sensor vorhanden ist oder ein vorhandener Sensor keinen Notfall detektiert. Dazu kann vorzugsweise ein manuelles Betätigungselement vorhanden sein, das betätigt werden muss, um in diesen Situationen einen Notruf zu senden.

Vorteilhafterweise verfügt die Notrufeinrichtung über wenigstens ein Mikrofon, das außerhalb der Notrufeinheit und der Grundplatte oder innerhalb der Notrufeinheit angeordnet ist. Es ist vorzugsweise ein separates Bauteil der Notrufeinrichtung, so dass es nahezu frei im Fahrgastraum des Kraftfahrzeugs angeordnet werden kann. Vorzugsweise ist es unabhängig von der Ausgestaltung mit der Grundplatte verbunden. Alternativ oder zusätzlich dazu kann die Notrufeinrichtung wenigstens ein Mikrofon aufweisen, das in die Notrufeinheit integriert ist.

Vorzugsweise verfügt die Notrufeinrichtung, wie bereits dargelegt, über wenigstens eine Positions-Erkennungs-Einheit, insbesondere ein GPS-Modul, die außerhalb der Notrufeinheit und der Grundplatte oder innerhalb der Notrufeinheit angeordnet ist. Eine Notrufeinrichtung verfügt zudem vorzugsweise über ein GSM-Modul (GSM: Global System for Mobile Communications) mit wenigstens einer Antenne, eine Schnittstelle für eine Bluetooth- oder WLAN-Verbindung, einen Sim-Kartensteckplatz, bevorzugt für eine SIM-, Micro-SIM- oder Mini.SIM-Karte, einen Audioverstärker, einen Lautsprecher, eine elektronische Datenverarbeitungseinrichtung, beispielsweise einen Mikroprozessor mit internem elektronischen Datenspeicher und/oder eine Benutzerschnittstelle wie beispielsweise Taster, LEDs oder andere akustische oder optische Ausgabeeinrichtungen.

Mit Hilfe der beiliegenden Figuren wird nachfolgend ein Ausführungsbeispiel der vorliegenden Erfindung näher erläutert. Es zeigt:
- Figur 1: die schematische Darstellung einer Notrufeinrichtung gemäß einem ersten Ausführungsbeispiel der vorliegenden Erfindung,
- Figur 2: die schematische Darstellung einer Grundplatte,
- Figur 3: die schematische Darstellung einer Notrufeinrichtung aus einer anderen Perspektive,
- Figur 4: Detailansichten einer Notrufeinrichtung,
- Figur 5: die schematische Darstellung unterschiedlicher Phasen beim Befestigen einer Notrufeinheit an einer Grundplatte,
- Figur 6: die schematische Darstellung eines Innenraums eines Kraftfahrzeugs,
- Figur 7: die schematische Darstellung einer Mittelkonsole mit Getränkehalter,
- Figur 8: die schematische Darstellung einer in einem Kraftfahrzeug angeordneten Notrufeinrichtung,
- Figur 9: eine andere Darstellung einer in einem Kraftfahrzeug angeordneten Notrufeinrichtung,
- Figur 10: die schematische Darstellung eines Teils eines Notrufeinrichtung,
- Figur 11: die schematische Darstellung einer Notrufeinrichtung gemäß einem weiteren Ausführungsbeispiel der vorliegenden Erfindung,
- Figur 12: die schematische Darstellung eines Teils der Notrufeinrichtung,
- Figuren 13 bis 15: weitere Darstellungen von in ein Kraftfahrzeug eingebauten Notrufeinrichtungen.

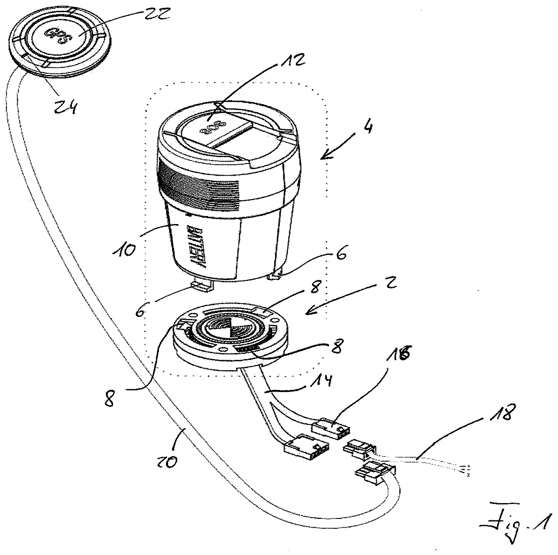

Figur 1 zeigt die Notrufeinrichtung 1 gemäß einem ersten Ausführungsbeispiel der vorliegenden Erfindung. Sie verfügt über eine Grundplatte 2, die in einem Getränkehalter eines Kraftfahrzeugs montiert werden kann. An ihr kann eine Notrufeinheit 4 befestigt werden, die dafür in ihrem unteren Bereich Vorsprünge 6 aufweist, die in dafür vorgesehene Aussparungen 8 in der Grundplatte 2 eingreifen können.

In der Notrufeinheit 4 befindet sich eine Speichereinrichtung in Form einer Batterie 10, die dafür sorgt, dass die Notrufeinheit 4 auch dann funktionsfähig ist, wenn sie nicht mit der Grundplatte 2 verbunden ist oder die Bordnetzspannung des Kraftfahrzeugs beispielsweise aufgrund eines Unfalls nicht mehr zur Verfügung steht. Die Notrufeinheit 4 verfügt zudem über ein manuelles Betätigungselement 12, mit dem ein Notruf auch dann ausgelöst werden kann, wenn ein nicht dargestellter Sensor, der in der Notrufeinheit 4 angeordnet ist, keinen Notfall erkannt hat.

An der Grundplatte 2 ist über ein Kabel 14 eine Steckeinrichtung 16 angeordnet, in die von einer Stromversorgung des Kraftfahrzeugs kommendes Stromversorgungskabel 18 sowie im gezeigten Ausführungsbeispiel ein Mikrofonkabel 20 einsteckbar ist. Am anderen Ende des Mikrofonkabels 20 befindet sich ein GPS-Modul 22, durch das die Position des Kraftfahrzeugs, in dem die Notrufeinrichtung 1 angeordnet ist, feststellbar ist. An dem GPS-Modul 22 ist im gezeigten Ausführungsbeispiel auch ein Mikrofon 24 angeordnet, durch das Geräusche und Sprache aus dem Innenraum des Kraftfahrzeugs aufgenommen und über eine Notrufsendevorrichtung, die Teil der Notrufeinheit 4 ist, einem Telefonat mit einer Notrufstelle oder Notfallzentrale zugeführt werden.

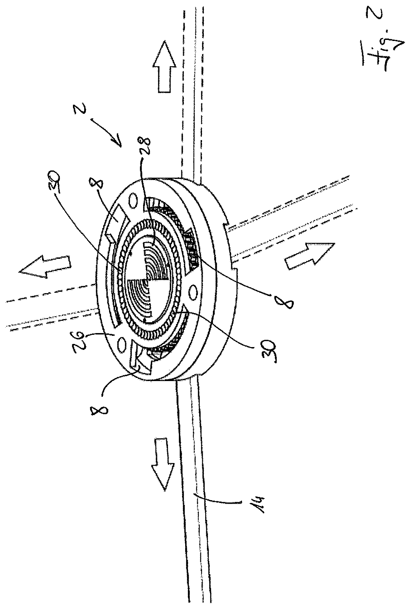

Figur 2 zeigt die Grundplatte 2 in einer vergrößerten Darstellung. Man erkennt das Kabel 14, das einmal mit durchgezogenen Linien und dreimal mit gestrichelten Linien dargestellt ist. Dadurch soll gezeigt werden, dass das Kabel 14 in vier unterschiedlichen Richtungen die Grundplatte 2 verlassen kann. An einer Oberseite 26 der Grundplatte 2 befinden sich die drei Aussparungen 8, in die die Vorsprünge 6 der Notrufeinheit 4 eingreifen können. In der Mitte befinden sich Leiterbahnen 28, die mit Kontakten in der Unterseite der Notrufeinheit 4 zusammenwirken und eine elektrische Kontaktierung ermöglichen, auch wenn die Notrufeinheit 4 relativ zur Grundplatte 2 verdreht wird. Zwischen den Aussparungen 8 und den Leiterbahnen 28 befindet sich ein Ring aus Vertiefungen 30, der mit Kugelelementen an der Bodenseite der Notrufeinheit 4 zusammenwirkt und so eine weitere Arretierung und Befestigung der Notrufeinheit 4 relativ zur Grundplatte 2 ermöglicht. Damit kann beispielsweise das durch Fertigungstoleranzen hervorgerufene Spiel zwischen den beiden zu verbindenden Bauteilen ausgeglichen werden.

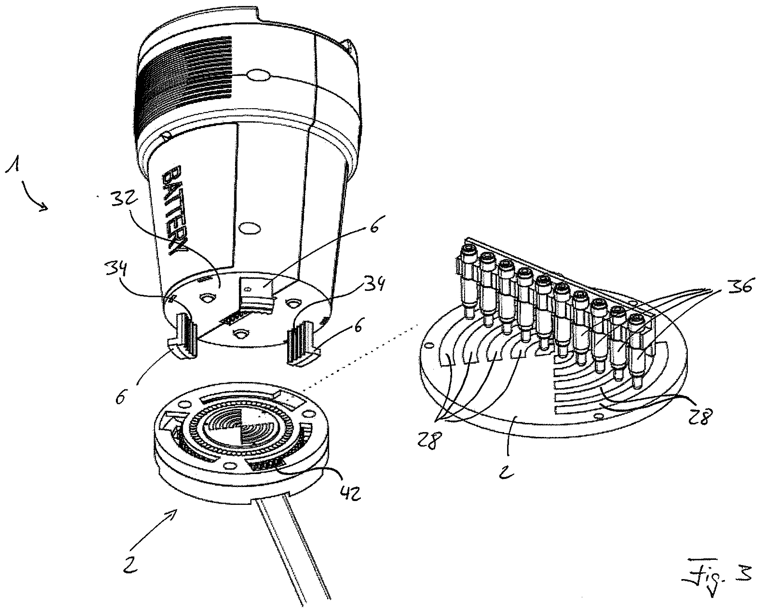

Figur 3 zeigt im linken Bereich eine weitere Darstellung der Notrufeinrichtung 1 aus einer anderen Perspektive. Deutlich zu erkennen sind die Vorsprünge 6 an einer Unterseite 32 der Notrufeinheit 4. Sie verfügen an der Radialinnenseite über Rillen 34, mit denen sie in dafür vorgesehene Zahnräder 36 eingreifen können, die sich in der Grundplatte 2 befinden.

Im rechten Teil der Figur 3 ist ein vergrößerter Ausschnitt der Grundplatte 2 gezeigt, der die Leiterbahnen 28 enthält. Sie kommen mit Kontaktstiften 36 in Kontakt, die Teil der Notrufeinheit 4 sind.

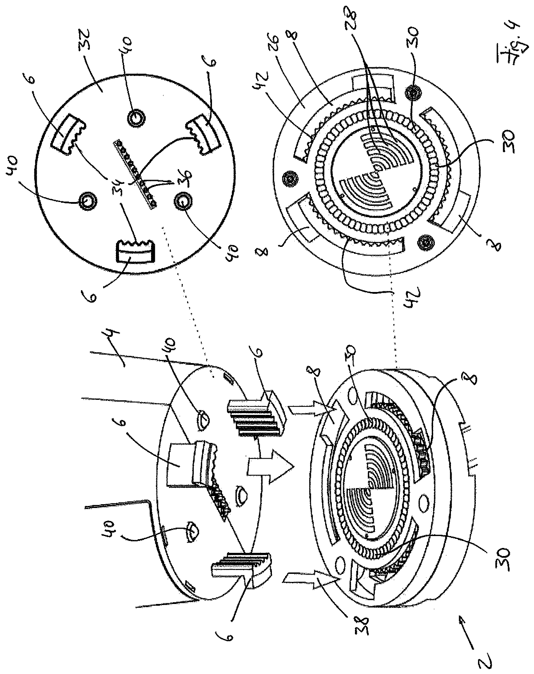

Figur 4 zeigt im linken Bereich die Grundplatte 2 sowie die Notrufeinheit 4 mit den Vorsprüngen 6, die den Pfeilen 38 folgen in die Aussparungen 8 eingeführt werden, um die Notrufeinheit 4 mit der Grundplatte 2 zu verbinden. Im rechten Teil der Figur 4 ist die Unterseite 32 der Notrufeinheit 4 und die Oberseite 26 der Grundplatte 2 jeweils in einer Draufsicht dargestellt. Man erkennt bei der Unterseite 32 zunächst die drei Vorsprünge 6 mit den Rillen 34. Zentral ist die Reihe mit Kontaktstiften 36 angeordnet, die für eine elektrische Kontaktierung der Notrufeinheit 4 sorgen. Zudem verfügt die Unterseite 32 über drei Kugelelemente 40, die über die Unterseite 32 hinausragen, wie dies im linken Teil der Figur 4 zu erkennen ist.

Die Oberseite 26 der Grundplatte 2 verfügt über die drei Aussparungen 8 unterhalb derer sich Zahnkränze 42 befinden, die mit den Rillen 34 zusammenwirken. Im mittleren Bereich der Oberseite 26 sind wieder die Leiterbahnen 28 dargestellt, die mit den Kontaktstiften 36 in Kontakt kommen, wenn die Notrufeinheit 4 mit der Grundplatte 2 verbunden wird. Zwischen den Aussparungen 8 und den Leiterbahnen 28 befindet sich der Ring aus Vertiefungen 30, in den die Kugelelemente 40 eingreifen können.

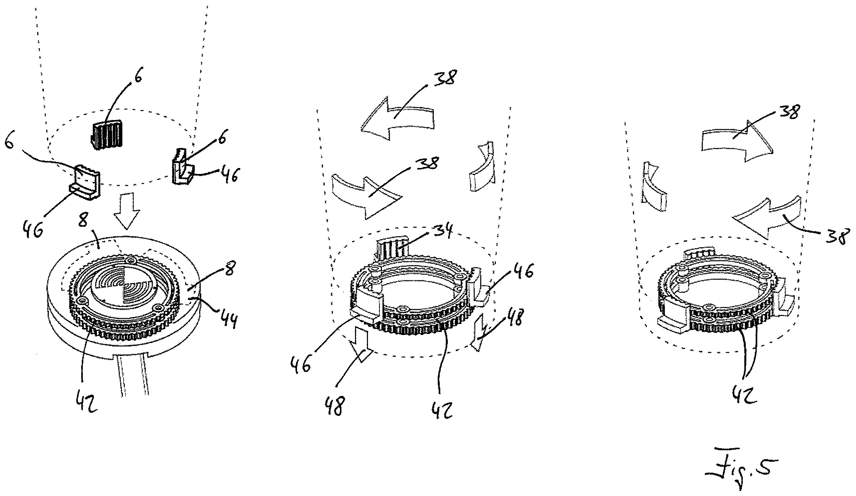

In Figur 5 sind die drei Schritte zum Verriegeln der Notrufeinheit 4 relativ zur Grundplatte 2 in dem gezeigten Ausführungsbeispiel dargestellt. Zunächst werden, wie im linken Bereich der Figur 5 dargestellt, die drei Vorsprünge 6 in die drei nur gestrichelt dargestellten Aussparungen 8 eingeführt. Dabei verfügen die Aussparungen 8 über einen vergrößerten Bereich 44, in den die nach radial außen hervorstehenden Verriegelungselemente 46 eingeführt werden können. Dabei greifen die Rillen 34 in den oberen der beiden Zahnkränze 42 ein. Anschließend wird den Pfeilen 38 folgend die Notrufeinheit 4 relativ zur Grundplatte 2 gedreht. Da die Rillen 34 in den oberen der beiden Zahnkränze 42 eingreift, wird dieser ebenfalls relativ zum Rest der Grundplatte 2 gedreht. Die Drehung der Notrufeinheit 4 hat zur Folge, dass die Verriegelungselemente 46 ebenfalls relativ zur Grundplatte 2 verdreht werden und sich dabei in der Ausnehmung 8 bewegen, bis sie eine Position erreichen, in der sie, den Pfeilen 48 folgend in Figur 5 nach unten, also in Richtung auf die Grundplatte 2, bewegt werden können. In diesem Fall greifen die Rillen 34 auch in die Zähne des unteren Zahnkranzes 42 ein. Für die vollständige Verriegelung wird die Notrufeinheit 4 den Pfeilen 38 im rechten Bereich der Figur 5 folgend die Notrufeinheit 4 wieder zurückgedreht, wobei beide Zahnkränze 42 mitgedreht werden.

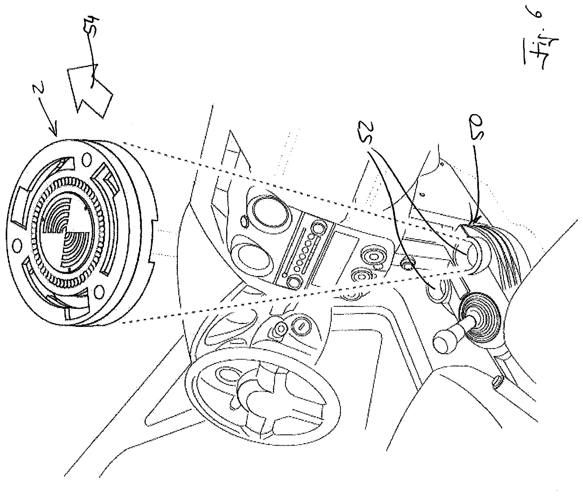

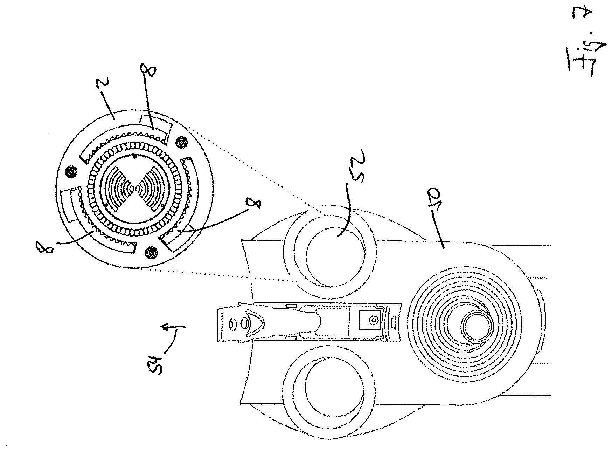

Figur 6 zeigt schematisch den Innenraum eines Kraftfahrzeuges mit einer Mittelkonsole 50, die über zwei Getränkehalter 52 verfügt. In den in Figur 6 rechts gezeigten Getränkehalter 52 ist die Grundplatte 2 montiert, die dabei an einer Fahrtrichtung 54 des Kraftfahrzeugs ausgerichtet ist. Dies ist in Figur 7 in einer Draufsicht nochmals dargestellt. Die Grundplatte 2 ist in dem rechten Getränkehalter 52 angeordnet, der Teil der Mittelkonsole 50 ist. Da die Grundplatte 2 fest im Getränkehalter 52 montiert wird, sind auch die Aussparungen 8 fest an der Fahrtrichtung 54 des Kraftfahrzeugs ausgerichtet, so dass insbesondere auch die an der Grundplatte 2 zu befestigenden Notrufeinheit 4 ausrichtbar ist. Dadurch wird gewährleistet, dass die in der Notrufeinheit 4 vorhandenen Sensoren, die nicht dargestellt sind, richtig in der vorbestimmten Weise relativ zur Fahrtrichtung des Kraftfahrzeugs ausgerichtet sind.

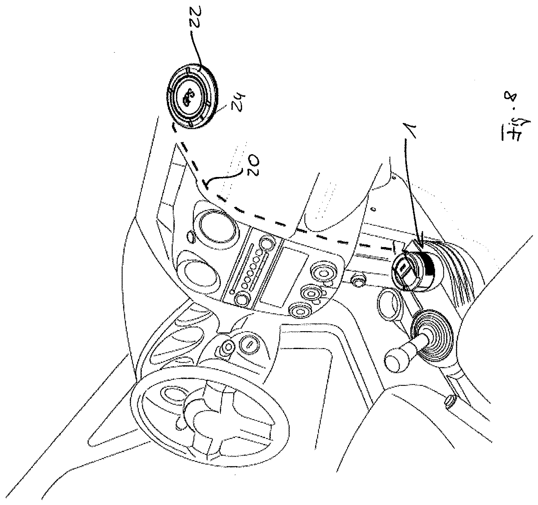

Figur 8 zeigt die Notrufeinrichtung 1, bei der das GPS-Modul 22 mit dem daran angeordneten Mikrofon 24 auf einer Ablagefläche im Raum des Beifahrers angeordnet ist. Das Mikrofonkabel 20 ist gestrichelt dargestellt, da es für die Insassen des Kraftfahrzeugs unsichtbar verlegt ist.

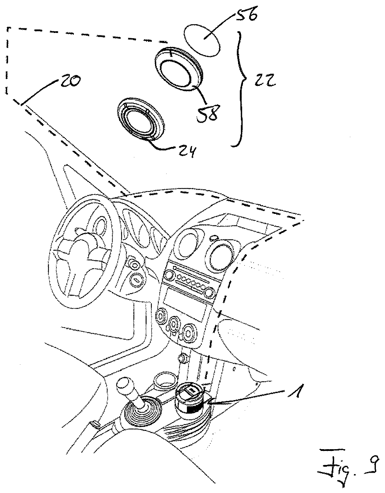

Figur 9 zeigt eine andere Anordnung der Notrufeinrichtung 1, bei der das GPS-Modul 22 mit dem Mikrofon 24 an einer nicht dargestellten Windschutzscheibe des Kraftfahrzeugs angeordnet wird. Dazu wird ein Positionierungsbereich 56 ausgewählt, an dem ein Saugnapf 58 oder beispielsweise doppelseitiges Klebeband angeordnet wird an dem die anderen Bauteile montiert werden. Auch hier ist das Mikrofonkabel 20 unsichtbar im Kraftfahrzeug verlegt.

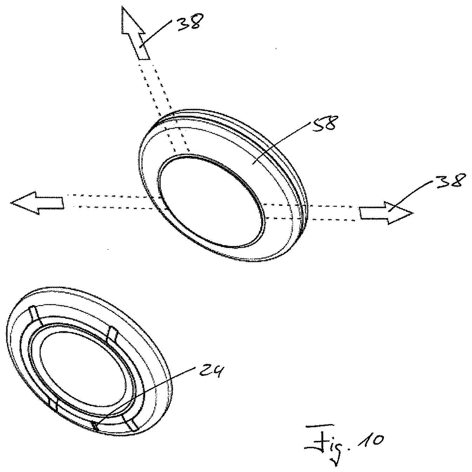

Figur 10 zeigt eine vergrößerte Darstellung des Saugnapfes 58, der in unterschiedliche Richtungen verschieblich, wie durch die Pfeile 38 dargestellt, an einer Windschutzscheibe angeordnet ist. An Stelle des Saugnapfes 58 können selbstverständlich auch andere Befestigungsmittel verwendet werden. An ihnen wird das eigentliche GPS-Modul und das Mikrofon 24 angeordnet.

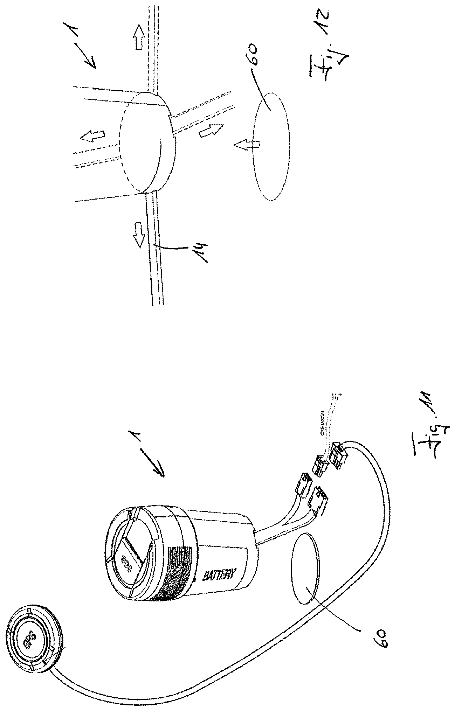

Figur 11 zeigt eine andere Ausführungsform der Notrufeinrichtung 1. Die Darstellung entspricht der in Figur 1 gezeigten Anordnung, wobei die Notrufeinrichtung 1 keine separate Grundplatte 2 und Notrufeinheit 4 aufweist, sondern einteilig ausgebildet ist. Sie wird über ein Befestigungsmittel 60 im Getränkehalter befestigt. Die übrigen Bauteile entsprechen den in Figur 1 dargestellten Bauteilen, sodass auf eine nähere Beschreibung verzichtet wird.

Figur 12 entspricht in ihrer Darstellung Figur 2. Auch hier wird das Kabel 14 in vier unterschiedlichen Richtungen aus einem Bodenbereich der Notrufeinrichtung 1 herausgeführt, bevor das Befestigungsmittel 60 an der nicht gezeigten Unterseite 32 angeordnet wird.

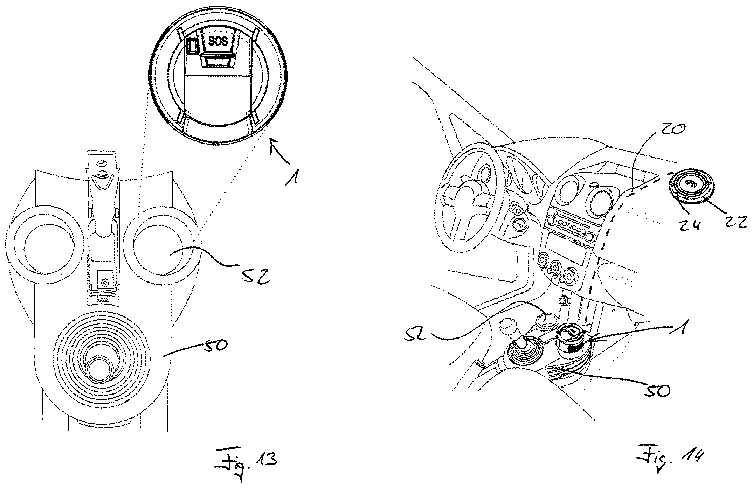

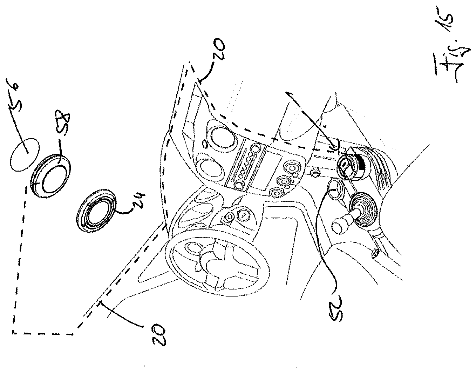

Figuren 13 bis 15 zeigen unterschiedliche Ansichten der Notrufeinrichtung 1, die in einem Getränkehalter 52 in der Mittelkonsole 50 des Kraftfahrzeugs angeordnet ist. In den Figuren 14 und 15 ist das GPS-Modul 22 mit dem daran angeordneten Mikrofon 24 einmal auf einer Ablage im Beifahrerbereich und einmal an der Windschutzscheibe angeordnet, wobei für die Befestigung an der Windschutzscheibe wieder der Saugnapf 58 verwendet wird.

**Bezugszeichenliste**

| | | | |
|---|---|---|---|
| 1 | Notrufeinrichtung | 50 | Mittelkonsole |
| 2 | Grundplatte | 52 | Getränkehalter |
| 4 | Notrufeinheit | 54 | Fahrtrichtung |
| 6 | Vorsprung | 56 | Positionierungsbereich |
| 8 | Aussparung | 58 | Saugnapf |
| | | | |
| 10 | Batterie | 60 | Befestigungsmittel |
| 12 | Betätigungselement | | |
| 14 | Kabel | | |
| 16 | Steckeinrichtung | | |
| 18 | Stromversorgungskabel | | |
| | | | |
| 20 | Mikrofonkabel | | |
| 22 | GPS-Modul | | |
| 24 | Mikrofon | | |
| 26 | Oberseite | | |
| 28 | Leiterbahn | | |
| | | | |
| 30 | Vertiefung | | |
| 32 | Unterseite | | |
| 34 | Rille | | |
| 36 | Kontaktstift | | |
| 38 | Pfeil | | |
| | | | |
| 40 | Kugelelement | | |
| 42 | Zahnkranz | | |
| 44 | vergrößerter Bereich | | |
| 46 | Verriegelungselement | | |
| 48 | Pfeil | | |

## Patentansprüche

1. Notrufeinrichtung (1) für ein Kraftfahrzeug, wobei die Notrufeinrichtung (1) eingerichtet ist,
- in einem Getränkehalter (52) des Kraftfahrzeuges montiert zu werden und
- an eine Stromversorgung des Kraftfahrzeugs angeschlossen zu werden, durch die die Notrufeinrichtung (1) mit elektrischer Energie versorgbar ist, wobei die Notrufeinrichtung (1) eine Grundplatte (2) zum Montieren in dem Getränkehalter und eine Notrufeinheit (4) zum Befestigen an der Grundplatte aufweist, wobei die Notrufeinheit (4) vorzugsweise lösbar an der Grundplatte (2) befestigt ist, **dadurch gekennzeichnet, dass** an der Notrufeinheit (4) und der Grundplatte (2) korrespondierende Rast- oder Formschlusselemente (6, 8) angeordnet sind, durch die die Notrufeinheit (4) an der Grundplatte (2) verriegelbar ist, wobei die Notrufeinheit (4) relativ zu der Grundplatte (2) in zwei einander entgegengesetzten Richtungen bewegt, vorzugsweise gedreht werden muss, um die Notrufeinheit (4) und die Grundplatte (2) zu verriegeln.

2. Notrufeinrichtung (1) nach Anspruch 1, **dadurch gekennzeichnet, dass** die Notrufeinheit (4) nur in diskreten Orientierungen, vorzugsweise nur in einer einzigen Orientierung, relativ zu der Grundplatte (2) an der Grundplatte (2) befestigbar ist.

3. Notrufeinrichtung (1) nach einem der vorstehenden Ansprüche, **dadurch gekennzeichnet, dass** die Notrufeinheit (4) relativ zu der Grundplatte (2) innerhalb eines vorbestimmten Winkelbereiches drehbar ist, wenn die Notrufeinheit (4) mit der Grundplatte (2) verbunden ist.

4. Notrufeinrichtung (1) nach einem der vorstehenden Ansprüche, **dadurch gekennzeichnet, dass** die Notrufeinheit (4) wenigstens einen Beschleunigungssensor zum Detektieren einer Notsituation und eine Notrufsendevorrichtung aufweist, die eingerichtet ist, einen Notruf zu senden, wenn eine Notsituation detektiert wurde.

5. Notrufeinrichtung (1) nach einem der vorstehenden Ansprüche, **dadurch gekennzeichnet, dass** die Notrufeinrichtung (1) wenigstens ein Mikrofon (24) aufweist, das außerhalb der Notrufeinheit (4) und der Grundplatte (2) oder innerhalb der Notrufeinheit (4) angeordnet ist.

6. Notrufeinrichtung (1) nach einem der vorstehenden Ansprüche, **dadurch gekennzeichnet, dass** die Notrufeinrichtung (1) wenigstens eine Positions-Erkennungs-Einheit, insbesondere ein GPS-Modul (22) aufweist, die außerhalb der Notrufeinheit (4) und der Grundplatte (2) oder innerhalb der Notrufeinheit (4) angeordnet ist.

7. Notrufeinrichtung (1) nach Anspruch 5, **dadurch gekennzeichnet, dass** das Mikrofon (24) über eine Datenübertragungseinrichtung, vorzugsweise ein Mikrofonkabel (20), mit der Grundplatte (2) verbunden ist.

## Claims

1. An emergency call device (1) for a motor vehicle, wherein the emergency call device (1) is configured
- to be installed in a cup holder (52) of the motor vehicle, and
- to be connected to a power supply of the motor vehicle, by way of which the emergency call device (1) can be supplied with electric energy, wherein the emergency call device (1) features a base plate (2) for installing said emergency call device in the cup holder and an emergency call unit (4) for fixing it to the base plate, wherein the emergency call unit (4) is preferably fixed to the base plate (2) such that it can be detached, **characterised by the fact that** corresponding latch or positive locking elements (6,8) are arranged on the emergency call unit (4) and the base plate (2), wherein the emergency call unit (4) or base plate (2) can be locked by way of said latch or positive locking elements, wherein the emergency call unit (4) must be moved - preferably rotated - relative to the base plate (2) in two opposing directions in order to lock the emergency call unit (4) and the base plate (2).

2. The emergency call device (1) according to claim 1, **characterised by the fact that** the emergency call unit (4) can only be fixed on the base plate (2) in discrete orientations, preferably in a single orientation only, relative to the base plate (2).

3. The emergency call device (1) according to one of the above claims, **characterised by the fact that** the emergency call unit (4) can be rotated within a predetermined angular range relative to the base plate (2) when the emergency call unit (4) is connected to the base plate (2).

4. The emergency call device (1) according to one of the above claims, **characterised by the fact that** the emergency call unit (4) comprises at least one acceleration sensor for detecting an emergency situation and one emergency call sending device, which is configured to make an emergency call when an emergency situation is detected.

5. The emergency call device (1) according to one of the above claims, **characterised by the fact that** the emergency call device (1) has at least one microphone (24) that is arranged outside the emergency call unit (4) and the base plate (2) or inside the emergency call unit (4).

6. The emergency call device (1) according to one of the above claims, **characterised by the fact that** the emergency call device (1) has at least one position recognition unit, in particular a GPS module (22), that is arranged outside the emergency call unit (4) and the base plate (2) or inside the emergency call unit (4).

7. The emergency call device (1) according to claim 5, **characterised by the fact that** the microphone (24) is connected to the base plate (2) by way of a data transmission device, preferably a microphone cable (20).

## Revendications

1. Dispositif d'appel d'urgence (1) pour un véhicule automobile, le dispositif d'appel d'urgence (1) étant conçu pour
- être monté dans un porte-gobelet (52) du véhicule automobile et
- pour être raccordé à une alimentation électrique du véhicule automobile au moyen de laquelle le dispositif d'appel d'urgence (1) peut être alimenté en énergie électrique, le dispositif d'appel d'urgence (1) comportant une plaque de base (2) à monter dans le porte-gobelet et une unité d'appel d'urgence (4) à fixer sur la plaque de base, l'unité d'appel d'urgence (4) étant fixée de préférence de manière amovible sur la plaque de base (2),
**caractérisé en ce que**
des éléments de verrouillage ou de coopération de forme (6, 8) correspondants sont disposés sur l'unité d'appel d'urgence (4) et sur la plaque de base (2), au moyen desquels l'unité d'appel d'urgence (4) peut être verrouillée sur la plaque de base (2), l'unité d'appel d'urgence (4) devant être déplacée, de préférence tournée, par rapport à la plaque de base (2) dans deux directions mutuellement opposées, afin de verrouiller l'unité d'appel d'urgence (4) et la plaque de base (2).

2. Dispositif d'appel d'urgence (1) selon la revendication 1,
**caractérisé en ce que**
l'unité d'appel d'urgence (4) ne peut être fixée sur la plaque de base (2) que dans des orientations discrètes, de préférence dans une seule orientation, par rapport à la plaque de base (2).

3. Dispositif d'appel d'urgence (1) selon l'une des revendications précédentes,
**caractérisé en ce que**
l'unité d'appel d'urgence (4) est mobile en rotation par rapport à la plaque de base (2) à l'intérieur d'une plage angulaire prédéterminée lorsque l'unité d'appel d'urgence (4) est reliée à la plaque de base (2).

4. Dispositif d'appel d'urgence (1) selon l'une des revendications précédentes,
**caractérisé en ce que**
l'unité d'appel d'urgence (4) comprend au moins un capteur d'accélération pour détecter une situation d'urgence et un moyen émetteur d'appel d'urgence qui est conçu pour émettre un appel d'urgence lorsqu'une situation d'urgence a été détectée.

5. Dispositif d'appel d'urgence (1) selon l'une des revendications précédentes,
**caractérisé en ce que**
le dispositif d'appel d'urgence (1) comprend au moins un microphone (24) qui est agencé à l'extérieur de l'unité d'appel d'urgence (4) et de la plaque de base (2) ou à l'intérieur de l'unité d'appel d'urgence (4).

6. Dispositif d'appel d'urgence (1) selon l'une des revendications précédentes,
**caractérisé en ce que**
le dispositif d'appel d'urgence (1) comprend au moins une unité de détection de position, en particulier un module GPS (22), qui est agencé(e) à l'extérieur de l'unité d'appel d'urgence (4) et de la plaque de base (2) ou à l'intérieur de l'unité d'appel d'urgence (4).

7. Dispositif d'appel d'urgence (1) selon la revendication 5,
**caractérisé en ce que**
le microphone (24) est relié à la plaque de base (2) par un moyen de transmission de données, de préférence par un câble de microphone (20).
